# EUROPEAN PATENT APPLICATION

(11) **EP 4 502 929 A1**
(43) Date of publication of application: **05.02.2025**
(21) Application number: 23778953.2
(22) Date of filing: 15.02.2023
(51) Int. Cl.: G06T 7/00, G06Q 50/04, B29C 48/40, B29C 48/505, B29C 48/92, G06V 10/82

(54) **SCREW CONFIGURATION ESTIMATION DEVICE, SCREW CONFIGURATION ESTIMATION METHOD, AND COMPUTER PROGRAM**

(30) Priority: 31.03.2022 JP 2022060714
(71) Applicant: The Japan Steel Works, Ltd., Tokyo 141-0032 (JP)
(72) Inventor: ODA, Tomoya, Tokyo 141-0032 (JP); FUKUZAWA, Yohei, Tokyo 141-0032 (JP); OKIMOTO, Tasuku, Tokyo 141-0032 (JP)
(74) Representative: Simmons & Simmons LLP (Munich)
(86) International application number: PCT/JP2023/005092
(87) International publication number: WO 2023/188919

(57) **Abstract**

A screw configuration estimation device for estimating the configuration of an extruder screw obtained by combining a plurality of screw pieces, said screw configuration estimation device comprising: an acquisition unit that acquires appearance data representing the appearance of a plurality of arrayed screw pieces or a screw; and a calculation unit that performs a calculation process for estimating the aligned position and type of each of the plurality of screw pieces constituting the screw on the basis of the acquired appearance data.

## Description

### Technical Field

The present disclosure relates to a screw construction inference device, a screw construction inference method and a computer program.

### Background Art

As for a screw of an extruder, multiple types of screw pieces are combined and integrated together. The screw pieces are checked for an assembly error with eyes. For a twin-screw extruder, the screw pieces are checked for an assembly error based on a feel when two screws are combined and rotated.

### Citation List

### Patent Literature:

Patent Literature 1: Japanese Patent Application Laid-Open Publication No. 2018-43419

### Summary of Invention

### Technical Problems

Such checking by human, however, had a possibility of overlooking an assembly error. A twin-screw extruder, which is attached with a misassembled screw and operated, may cause damage to the screws that rotate in mesh with each other.

The object of the present disclosure is to provide a screw construction inference device, a screw construction inference method and a computer program that are capable of inferring the alignment positions and types of multiple screw pieces that constitute a screw for an extruder.

### Solution to Problems

A screw construction inference device according to one aspect of the present disclosure is a screw construction inference device inferring a construction of a screw used for an extruder constructed by assembling a plurality of screw pieces, comprising: an acquisition unit that acquires appearance data indicating an appearance of the screw or the plurality of screw pieces aligned; and an arithmetic unit that infers an alignment position and a type for each of the plurality of screw pieces constituting the screw, based on the acquired appearance data.

A screw construction inference method according to one aspect of the present disclosure is a screw construction inference method inferring a construction of a screw used for an extruder constructed by assembling a plurality of screw pieces, comprising: acquiring appearance data indicating an appearance of the screw or the plurality of screw pieces aligned; and inferring an alignment position and a type for each of the plurality of screw pieces constituting the screw, based on the acquired appearance data.

A computer program according to one aspect of the present disclosure is a computer program causing a computer to execute processing of inferring a construction of a screw used for an extruder constructed by assembling a plurality of screw pieces, the computer program causing the computer to execute the processing of: acquiring appearance data indicating an appearance of the screw or the plurality of screw pieces aligned; and inferring an alignment position and a type for each of the plurality of screw pieces constituting the screw, based on the acquired appearance data.

### Advantageous Effects of Invention

According to the present disclosure, the alignment positions and types of multiple screw pieces that constitute a screw for an extruder can be inferred.

### Brief Description of Drawings

FIG. 1 is a block diagram illustrating an example of the configuration of a screw construction inference device according to Embodiment 1.
FIG. 2 is a schematic diagram illustrating an example of the configuration of a screw.
FIG. 3 is a conceptual diagram illustrating an object detection learning model according to Embodiment 1.
FIG. 4 is a conceptual diagram illustrating a screw piece table.
FIG. 5 is a flowchart illustrating a screw construction inference method according to Embodiment 1.
FIG. 6 is a schematic diagram illustrating an appearance data capture screen.
FIG. 7 is a conceptual diagram illustrating detection results of objects.
FIG. 8 is a table indicating detection results of objects.
FIG. 9 is a conceptual diagram illustrating alignment data of the screw construction.
FIG. 10 is a flowchart depicting an assembly error determination processing according to Embodiment 1.
FIG. 11 is a schematic diagram illustrating another example of a method of capturing appearance data.
FIG. 12 is a flowchart depicting an assembly error determination processing according to Embodiment 2.
FIG. 13 is a block diagram illustrating an example of the configuration of a screw construction inference device according to Embodiment 3.
FIG. 14 is a conceptual diagram illustrating a type recognition detection learning model according to Embodiment 3.
FIG. 15 is a flowchart depicting a screw construction inference method according to Embodiment 3.

Specific examples of a screw construction inference device, a screw construction inference method and a computer program according to embodiments of the present invention will be described below with reference to the drawings. It should be noted that the present invention is not limited to these examples, and is indicated by the scope of claims, and is intended to include all modifications within the meaning and scope equivalent to the scope of claims. Furthermore, at least parts of the following embodiment and modifications may arbitrarily be combined.

Hereinafter, the present invention will specifically be described with reference to the drawings illustrating the embodiments thereof.

### Embodiment 1

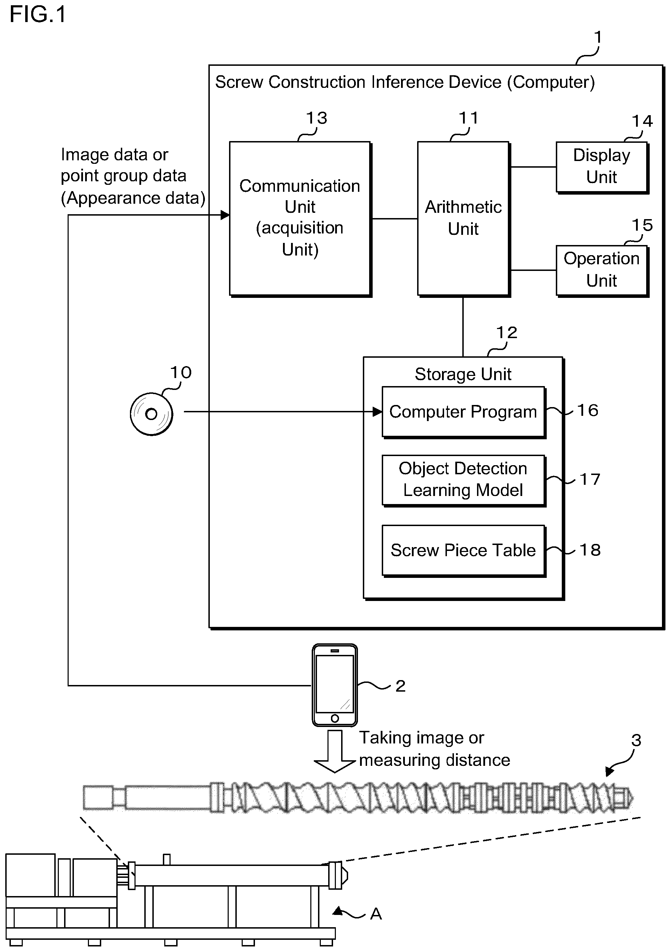

FIG. 1 is a block diagram illustrating an example of the configuration of a screw construction inference device 1 according to Embodiment 1. The screw construction inference device 1 according to Embodiment 1 is a computer that executes arithmetic processing for inferring the construction of a screw 3 formed by assembling multiple screw pieces 3a for an extruder A.

The extruder A includes a cylinder with a heater, the screw 3 that is provided so as to be drivable in a rotary direction within the cylinder and melts/plasticizes and kneads raw materials, and a rotary motor that rotates the screw 3.

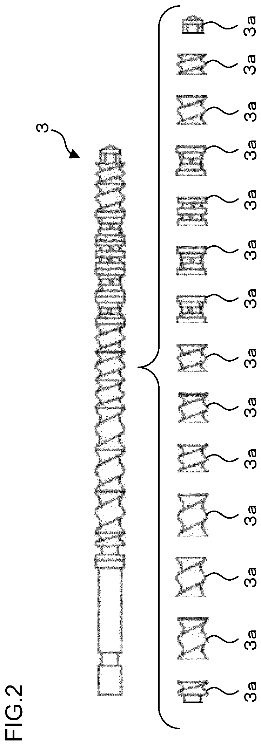

FIG. 2 is a schematic diagram illustrating an example of the configuration of the screw 3. As for the screw 3, multiple types of screw pieces 3a are combined and integrated together to form a bar of screw 3. A flight screw-shaped forward flight piece that carries raw materials in a forward direction, a reverse flight piece that carries raw materials in a reverse direction, a kneading piece that kneads raw materials and the like are combined in an order and at positions according to the characteristics of the raw materials, to form the screw 3.

The screw construction inference device 1 includes an arithmetic unit 11, a storage unit 12, a communication unit 13, a display unit 14 and an operation unit 15, as hardware structures.

The arithmetic unit 11 is a processor having an arithmetic circuit such as a CPU (Central Processing Unit), an MPU (Micro-Processing Unit), an Application Specific Integrated Circuit (ASIC), a Field-Programmable Gate Array (FPGA) or the like and an internal storage device such as a ROM (Read Only Memory), a RAM (Random Access Memory), an I/O terminal or the like. The arithmetic unit 11 may include one or more arithmetic circuits such as a GPU (Graphics Processing Unit), a TPU (Tensor Processing Unit) or an AI chip (AI semiconductor) dedicated to image processing related to object detection and image recognition. The arithmetic unit 11 reads and executes a computer program (program product) 16 stored in the storage unit 12 to perform screw construction inference processing. Functional parts of the screw construction inference device 1 may be realized in software, or may partially or entirely be realized in hardware.

The storage unit 12 is a storage such as a hard disk, an EEPROM (Electrically Erasable Programmable ROM), a flash memory or the like. The storage unit 12 stores various programs to be executed by the arithmetic unit 11 and various data necessary for the processing by the arithmetic unit 11. In the present embodiment, the storage unit 12 stores a computer program 16 to be executed by at least the arithmetic unit 11. The storage unit 12 further stores an object detection learning model 17 and a screw piece table 18. The details of the object detection learning model 17 and the screw piece table 18 are described below.

The computer program 16 may be written into the storage unit 12 at the manufacturing stage of the screw construction inference device 1 or may be delivered through the network from another information processing apparatus. The screw piece construction inference device 1 acquires the computer program 16 through communication and writes it into the storage unit 12. The computer program 16 may be readably recorded in a recording medium 10 including a semiconductor memory such as a flash memory, an optical disk, a magneto-optical disk and a magnetic disk. The screw construction inference device 1 reads the computer program 16 and stores it in the storage unit 12.

The communication unit 13 is a communication circuit that transmits and receives data to/from a measurement device 2 in a wired or wireless manner. The communication unit 13 may be a circuit that reads data from a memory of the measurement device 2 or a recording medium removed from the measurement device 2. The communication unit 13 functions as an acquisition unit that acquires appearance data indicating the appearance of the aligned multiple screw pieces 3a or the screw 3.

The measurement device 2 is equipment that can acquire appearance data indicating the appearance of the screw 3 or the aligned multiple screw pieces 3a. The communication equipment is a camera or a video camera for taking an image of the screw 3, for example. The communication equipment may be a smartphone, a tablet terminal, a laptop PC (personal computer) or the like that has a light receiving lens and an image sensor. The measurement device 2 with an image taking function transmits image data representing the appearance of the screw 3 as appearance data to the screw construction inference device 1. The image data is data containing the pixel values of multiple pixels aligned horizontally and vertically.

A method of taking an image of the elongated screw 3 is not particularly limited, but may include taking an overall image of the screw 3 to fit into one image, or combining taken images of one end and the other end of the screw 3 to generate one composite image containing the entire screw 3. In addition, the screw 3 may be imaged while being scanned from one end to the other, to produce a composite image containing the entire screw 3. The taken image of the screw 3 may be moving images.

The measurement device 2 may be a range sensor that obtains point group data by measuring multiple points on the surface of the screw 3. The range sensor includes an infrared sensor such as LiDAR. The infrared sensor is provided with a light emitting element that emits infrared rays and a light receiving element that receives infrared rays emitted to and reflected from the screw 3. The light emitting element is an infrared laser, such as a Vertical Cavity Surface Emitting LASER (VCSEL), which irradiates the screw 3 with a dot pattern arranged vertically and horizontally. The light receiving element is, for example, a CMOS image sensor. The infrared sensor calculates the distance to the screw 3 based on the round-trip time from when light is emitted to the screw 3 to when it is reflected back. The measurement device 2 calculates the distance to each dot pattern and transmits the point group data, which is the three-dimensional information of the screw 3, as appearance data, to the screw construction inference device 1. The point group data represents multiple points on the surface of the screw 3 as three-dimensional coordinates, for example.

The screw construction inference device 1 acquires, through the communication unit 13, image data or point group data as appearance data that is transmitted from the measurement device 2 and stores it in the storage unit 12. The arithmetic unit 11 can convert the point group data into voxel data. The arithmetic unit 11 can also convert the point group data or the voxel data into two-dimensional image data.

For the sake of simplicity, an example where a screw construction is estimated using two-dimensional image data is described below. A two-dimensional image of the screw 3 obtained by taking an image of or measuring the distance from the screw 3 is appropriately referred to as a screw image, and data of the two-dimensional image is appropriately referred to as screw image data.

The display unit 14 is a display device such as a liquid crystal display panel, an organic EL display panel or the like. The display unit 14 displays the inference result of the screw construction of Embodiment 1 according to the control of the arithmetic unit 11.

The operation unit 15 is an input device such as a touch panel, a mouse, an operation button, a keyboard or the like that accepts the operation by the user who uses the screw construction inference device 1.

The screw construction inference device 1 described above may be a multi-computer consisting of multiple computers, and may be a virtual machine virtually constructed by software. In addition, part or all of the screw construction inference device 1 may be constructed as a cloud server.

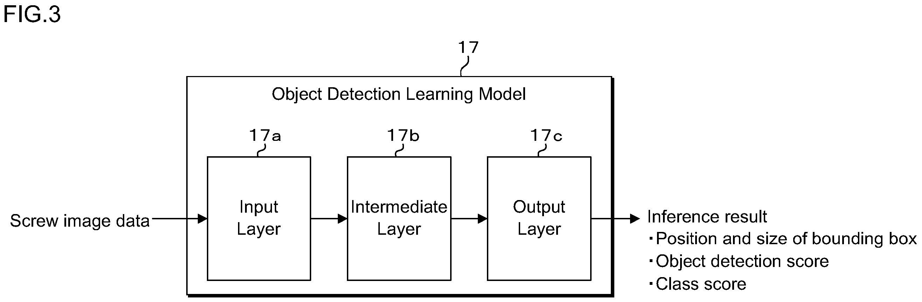

FIG. 3 is a conceptual diagram illustrating an object detection learning model 17 according to Embodiment 1. The object detection learning model 17 includes a convolutional neural network (CNN) having been trained by deep learning, for example. The object detection learning model 17 includes an input layer 17a that receives input of screw image data, an intermediate layer 17b that extracts features of the screw image data and an output layer 17c that outputs an inference result related to the detected object. The object detection learning model 17 is a YOLO model, for example.

Each layer of the object detection learning model 17 has multiple nodes. Nodes of the respective layers are connected by the edges. Each layer has an activation function (response function), and the edges have weights. Values output from the nodes of each layer are calculated from the values of the nodes in the preceding layer, the weights of the edges and the activation function of the layer. The weights of the edges can be changed by learning.

The input layer 17a of the object detection learning model 17 has multiple nodes that accept the input of the screw image data, that is, the pixel values of the respective pixels constituting the image of the surface of the screw 3, and passes the input pixel values to the intermediate layer 17b.

The intermediate layer 17b has multiple sets of convolutional layers (CONV layer) and pooling layers, and a fully connected layer. Each convolutional layer performs filtering processing on the values output from the nodes in the preceding layer to extract a feature map. Each pooling layer reduces the feature map output from the convolutional layer to obtain a new feature map.

The output layer 17c has a node that outputs a final inference result related to an object detected from the screw image. The inference result includes the **position** of the central coordinates of and the vertical and horizontal dimensions of a bounding box that surrounds an object, an object detection score indicating certainty that the image surrounded by the bounding box is an image of the object, and a class score indicating certainty that the object belongs to a specific class.

More specifically, the normalized screw image to be input to the input layer 17a is divided into multiple grid cells. For each grid cell, the position, dimensions, object score and class score of the bounding box are evaluated. The position of the bounding box in a grid cell is expressed as, for example, the position relative to the upper left vertex or the central position of the grid cell.

Assuming that the screw image is divided into S × S grid cells, the number of bounding boxes to be detected per grid is B, and the number of classes for the object is C, the output obtained from the output layer 17c is a tensor of S × S × (B × 5 + C) dimension, for example.

Though the output obtained from the output layer 17c contains multiple bounding boxes that overlap one another, post processing to eliminate the overlapping bounding boxes, for example, NMS (Non-Maximum Suppression) processing is performed to obtain the position, the dimensions, the object detection score and the class score of the bounding box that has the highest certainty out of the bounding boxes surrounding one or more objects contained in the screw image.

A method of generating the object detection learning model 17 is described. Training data including multiple screw image data and annotation files of the respective screw image data are prepared. Each annotation file is teacher data indicating a correct value to be attached to the corresponding screw image. Specifically, the annotation file is data indicating the position of the central coordinates, the vertical and horizontal dimensions and the class of a bounding box that surrounds the image of the screw piece 3a contained in the corresponding screw image. The class indicates a group classified depending on the type of the screw piece 3a. The type of the screw piece 3a is defined by the L/D, the lead, the lead angle, the number of threads and the like of the screw piece 3a.

The weight coefficients of a neural network are optimized such that the error (value of a given loss function or error function) between data output, when a screw image of the training data is input to a CNN, from the CNN and data indicated by the teacher data is reduced using an error backpropagation and error gradient descent to thereby generate an object detection learning model 17.

Though YOLO is described as an example of the object detection learning model 17, the object detection learning model 17 may be constructed using R-CNN, Fast R-CNN, Faster R-CNN and other CNNs. The object detection learning model 17 may also be used employing algorithms such as decision trees, random forests and Support Vector Machine (SVM) or the like. In addition, the object detection learning model 17 may be constructed with the combination of the multiple aforementioned algorithms.

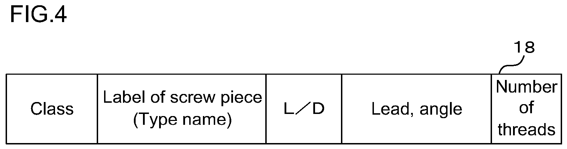

FIG. 4 is a conceptual diagram illustrating a screw piece table 18. The screw piece table 18 stores the class of an object and the label (type name), the L/D, the lead or angle (lead angle) and the number of threads of the screw piece 3a in association with each other. The L/D is a ratio of the length (L) in the lengthwise direction of and the diameter (D) of a screw piece 3a.

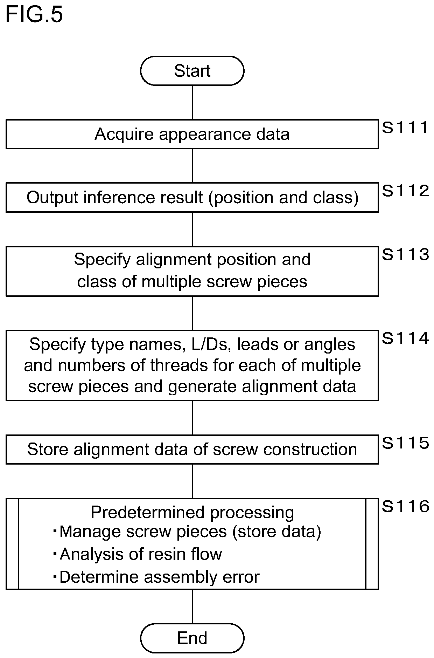

FIG. 5 is a flowchart illustrating a screw construction inference method according to Embodiment 1. The arithmetic unit 11 of the screw construction inference device 1 acquires appearance data from the measurement device 2 via the communication unit 13 (step S111). The appearance data is data indicating the appearance of the screw 3 or the aligned multiple screw pieces 3a. The arithmetic unit 11 is assumed to use two-dimensional screw image data based on the appearance data.

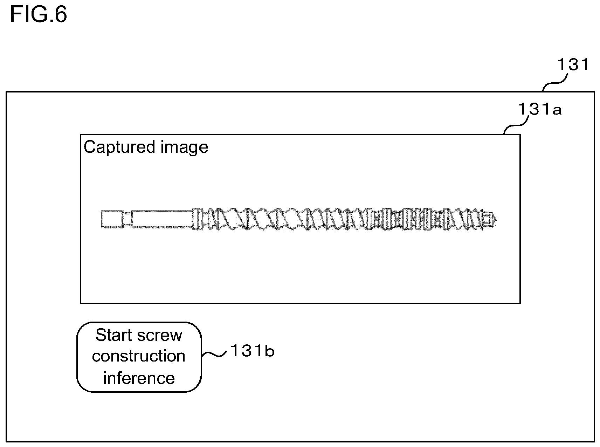

FIG. 6 is a schematic diagram illustrating an appearance data capture screen 131. The arithmetic unit 11 having acquired appearance data displays an appearance data capture screen 131 representing a screw image. The appearance data capture screen 131 includes a captured image display section 131a and a screw construction inference start button 131b. The arithmetic unit 11 displays a screw image at the captured image display section 131a on the basis of the acquired screw image data. In the case where the screw construction inference start button 131b is operated by the user, execution of the following screw construction inference processing is started.

The arithmetic unit 11 inputs the screw image data to the object detection learning model 17 to output a feature map (step S112). The feature map includes information for specifying the position and class of an object contained in the screw image.

The arithmetic unit 11 specifies the alignment positions and classes of the multiple screw pieces 3a on the basis of the feature map (step S113). Specifically, from the feature map, the coordinates of the central positions, the vertical and horizontal dimensions, object detection scores and class scores of the bounding boxes that respectively surround the multiple screw pieces 3a can be obtained. The arithmetic unit 11 specifies the positions, dimension and classes of the bounding boxes of the multiple screw pieces 3a based on the object detection scores and the class scores. For example, the class with the object detection score equal to or greater than a threshold and the highest-class score is specified.

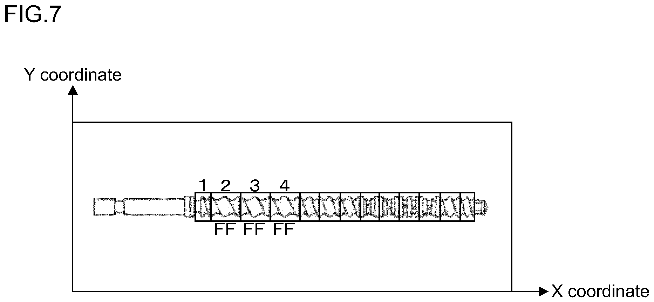

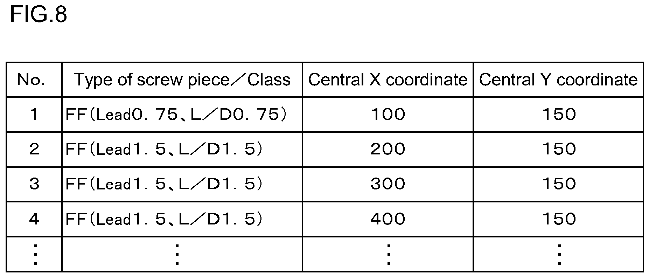

FIG. 7 is a conceptual diagram illustrating detection results of objects, and FIG. 8 is a table indicating detection results of objects. In FIG.7, the rectangular frames each represent a bounding box, and the numerals "1," "2," ... are numbers (No.) to respectively identify the specified screw pieces 3a. The central position of the bounding box is represented by the X coordinate and the Y coordinate. "FF" indicates the type of the screw piece 3a belonging to a specific class (forward flight piece).

The arithmetic unit 11 then specifies the type names, L/Ds, leads or angles (lead angles) and the numbers of threads for each of the identified multiple screw pieces 3a and generates the alignment data (step S114). More specifically, the arithmetic unit 11 refers to the screw piece table 18 using each of the classes of the identified multiple screw pieces 3a as a key and specifies the L/D, the lead or angle and the number of threads for each of the multiple screw pieces 3a. The arithmetic unit 11 then stores alignment data of the screw construction in the storage unit 12 (step S115).

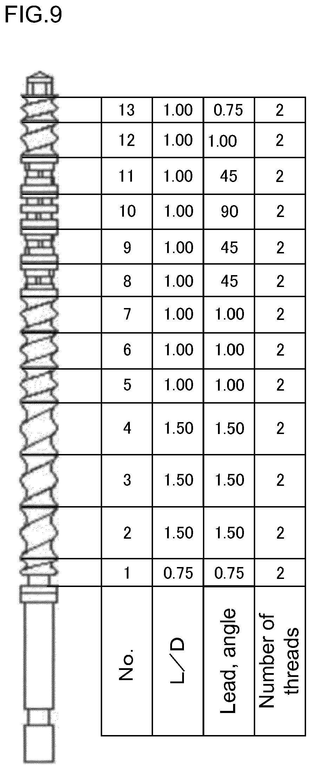

FIG. 9 is a conceptual diagram illustrating alignment data of the screw construction. The alignment data is data in which the alignment order of the multiple screw pieces 3a constituting the screw 3 is associated with the D/L (the ratio of the length and diameter), the lead or lead angle and the number of threads for each of the multiple screw pieces 3a. "No." in FIG. 9 conceptually indicates the alignment order of the multiple screw pieces 3a.

The arithmetic unit 11 executes predetermined processing on the basis of the generated and stored alignment data of the screw construction (step S116).

The arithmetic unit 11 can manage the screw pieces 3a by, for example, registering the alignment data of the screw construction in the database. For example, the information on the screw pieces 3a of the respective screws 3 loaded in one or more extruders A can be managed.

Moreover, the arithmetic unit 11 can perform behavior analysis of the extruder A and the analysis of resin flow based on the generated and stored alignment data of the screw 3.

In addition, the arithmetic unit 11 can determine an assembly error of the multiple screw pieces 3a based on the alignment data.

As one example of the predetermined processing, determination of an assembly error of the screw pieces 3a for the single screw 3 is described. The storage unit 12 is assumed to store the alignment data of a normal screw 3. In other words, the storage unit 12 stores alignment data indicating a correct alignment order and types of the multiple screw pieces 3a.

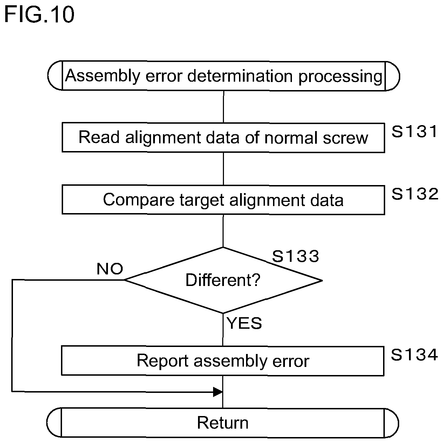

FIG. 10 is a flowchart depicting an assembly error determination processing according to Embodiment 1. The arithmetic unit 11 reads alignment data of the normal screw 3 stored in the storage unit 12 (step S131). The arithmetic unit 11 compares the alignment data of the screw 3 to be determined that is obtained by the processing through step S111 to S114 and the alignment data of the normal screw 3 (step S132) and determines whether or not a difference is present (step S133). In other words, the arithmetic unit 11 compares the screw pieces 3a located in the same alignment order in the L/D, the lead, the angle and the number of threads.

If determining that no difference is present (step S133: NO), the arithmetic unit 11 ends the assembly error determination processing. If determining that an assembly error is present (step S133: YES), the arithmetic unit 11 reports the presence of an assembly error (step S134) and ends the processing. For example, the arithmetic unit 11 displays the presence of an assembly error of the screw pieces 3a on the display unit 14. The arithmetic unit 11 may display the image of the screw 3, the image surrounding the screw piece 3a for which a difference is detected and the like, on the display unit 14. Moreover, the arithmetic unit 11 may be configured to display the screw piece 3a at the location where an assembly error is present by changing the color of the screw partial image, for example. In addition, the arithmetic unit 11 may display the alignment order of the misassembled screw piece 3 and the type of the correct screw piece 3a, on the display unit 14.

In addition, the screw construction inference device 1 may be equipped with a speaker or a light emitting device that, if detecting an assembly error of the screw pieces 3a, reports the presence of the assembly error to the user with sound or light. The screw construction inference device 1 may be configured to send report data for reporting an assembly error of the screw pieces 3a to a communication terminal of the user or a management device of the extruder A.

Though an example where the alignment data is compared is described, the alignment positions and classes of the multiple screw pieces 3a constituting the normal screw 3 are compared with the alignment positions and classes of the multiple screw pieces 3a constituting the screw 3 to be determined that are obtained by the processing through S111 to S113 to determine whether or not a difference is present.

The screw construction inference device 1 according to Embodiment 1 thus configured can infer the alignment positions and types of the multiple screw pieces 3a that constitute the screw 3 for the extruder A.

Furthermore, the screw construction inference device 1 can generate alignment data in which the alignment order, the L/D, the lead, the angle and the number of threads of the multiple screw pieces 3a constituting the screw 3 are associated with each other. The alignment data of the screw 3, if obtained, can be used for the management of the screw pieces 3a or the analysis of resin flow in the extruder A.

Moreover, the screw construction inference device 1 can determine the presence or absence of an assembly error of the screw pieces 3a and can report the assembly error. Specifically, the alignment data of a correct screw construction is compared with the alignment data of the screw 3 to be determined to thereby determine an assembly error of the screw pieces 3a. This allows for determination of an assembly error of the screw pieces 3a without relying on human hands.

In addition, with the use of the machine learning model, the positions and types of the screw pieces 3a that constitute the screw 3 can be inferred with high precision.

While Embodiment 1 described an example where alignment data of the screw 3 is generated based on the appearance data obtained by taking an image of or measuring the distance from the screw 3, appearance data may be used that is obtained by taking an image of or measuring the distance from the multiple screw pieces 3a aligned before being assembled.

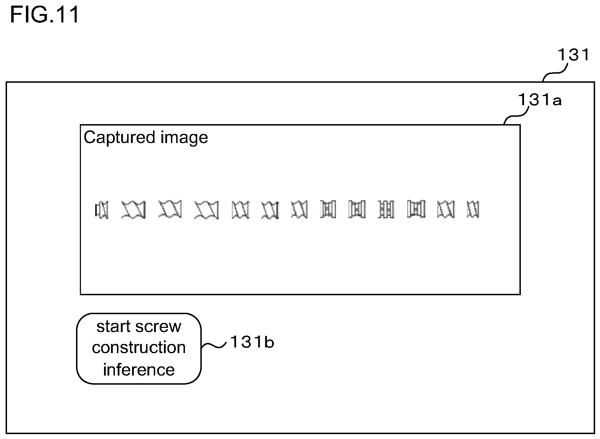

FIG. 11 is a schematic diagram illustrating another example of a method of capturing appearance data. The arithmetic unit 11 acquires the screw image data obtained by taking an image of the multiple screw pieces 3a aligned with spaces as illustrated in FIG.11. The arithmetic unit 11 inputs the screw image data to the object detection learning model 17 to thereby detect the multiple screw pieces 3a and obtain the alignment data of the screw 3.

For a screw image obtained by taking an image of the assembled screw 3, the boundary between screw pieces 3a may incorrectly be determined. By taking images of the screw pieces 3a aligned with spaces before assembly, more accurate alignment data may be detected.

The multiple screw pieces 3a may be assigned with marks that enable image identification. This allows the arithmetic unit 11 to correctly recognize each of the multiple screw pieces 3a based on the images of the marks contained in the screw image. The screw pieces 3a may be assigned with different marks based on the types of the screw pieces 3a. This allows for detection of the alignment positions and types of the screw pieces 3a that constitute the screw 3 with higher precision.

While Embodiment 1 described an example where the two-dimensional screw image data is processed, three-dimensional data may be used for generating alignment data. The three-dimensional data of the screw 3 can be obtained based on images taken from multiple different positions and angles using a camera or the like. The three-dimensional data of the screw 3 can also be obtained from the point group data obtained by measuring the distances. By using the learning model or matching of the three-dimensional data, the arithmetic unit 11 can likewise detect an assembly error of the screw pieces 3a.

### Embodiment 2

The screw construction inference device 1 according to Embodiment 2 is different from that of Embodiment 1 in that an assembly error of the two screws 3 loaded in a twin-screw extruder is determined. Since the other configurations of the screw construction inference device 1 are similar to those of the screw construction inference device according to Embodiment 1, corresponding parts are designated by similar reference codes and detailed description thereof will not be made.

The arithmetic unit 11 of the screw construction inference device 1 according to Embodiment 2 obtains appearance data of the two screws 3 loaded in the twin-screw extruder, generates alignment data of a first screw 3 and alignment data of a second screw 3 and stores them in the storage unit 12.

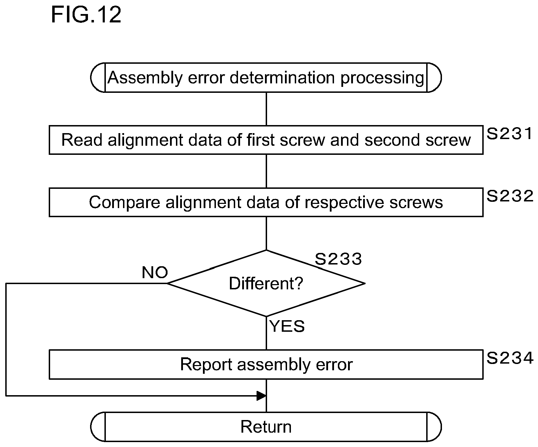

FIG. 12 is a flowchart depicting an assembly error determination processing according to Embodiment 2. The arithmetic unit 11 reads the alignment data of the first screw 3 and the alignment data of the second screw 3 that are stored in the storage unit 12 (step S231). The arithmetic unit 11 then compares the alignment data of the respective screws 3 (step S232).

The arithmetic unit 11 then determines whether or not a difference is present in the alignment data of the first screw 3 and the second screw 3 (step S233). If determining that no difference is present (step S233: NO), the arithmetic unit 11 ends the assembly error determination processing. If determining that a difference is present (step S233: YES), the arithmetic unit 11 reports the presence of the assembly error (step S234) and ends the determination processing.

The screw construction inference device 1 according to Embodiment 2 can determine the presence or absence of an assembly error by comparing the alignment data of the two screws 3 loaded in the twin-screw extruder, and can, if there is an assembly error, report it.

As in Embodiment 1, it may be possible that the alignment positions and classes of the multiple screw pieces 3a constituting the first screw 3 may be compared with the alignment positions and classes of the multiple screw pieces 3a constituting the second screw 3. The arithmetic unit 11 can determine the difference between the construction of the first screw 3 and the construction of the second screw 3 by comparing the screws in the alignment positions and classes. This determination allows for detection of an assembly error of the screw 3.

### Embodiment 3

The screw construction inference device 1 according to Embodiment 3 is different from that of Embodiment 1 in the method of specifying the alignment order and the type of the screw pieces 3a. Since the other configurations of the screw construction inference device 1 are similar to those of the screw construction inference device in Embodiment 1, corresponding parts are designated by similar reference codes and detailed description thereof will not be made.

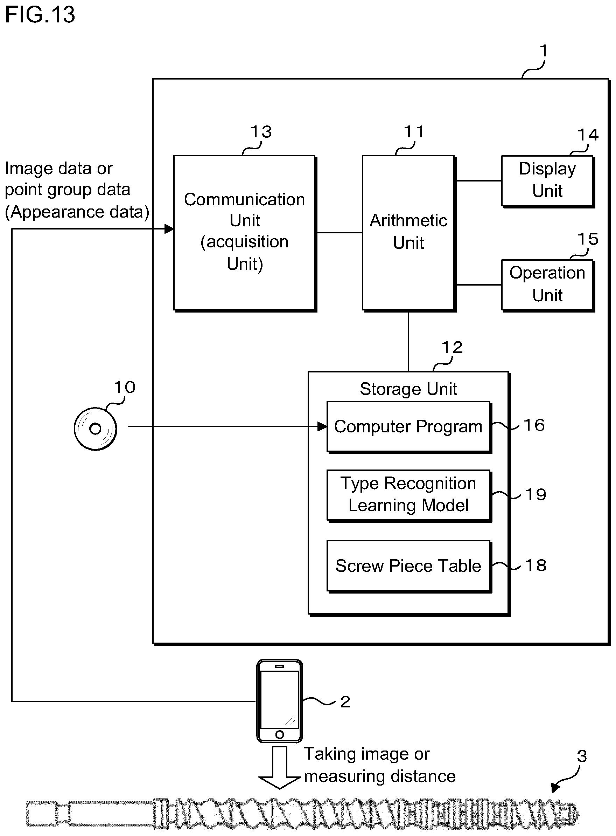

FIG. 13 is a block diagram illustrating an example of the configuration of the screw construction inference device 1 according to Embodiment 3. The storage unit 12 of the screw construction inference device 1 according to Embodiment 3 stores a type recognition learning model 19 instead of the object detection learning model 17.

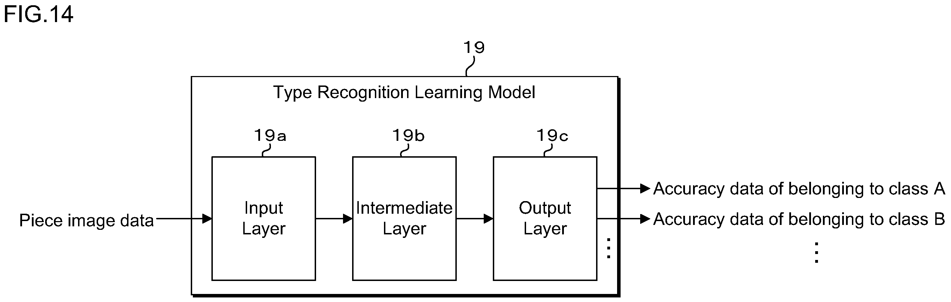

FIG. 14 is a conceptual diagram illustrating a type recognition detection learning model according to Embodiment 3. The type recognition detection learning model is an image recognition model. The type recognition learning model 19 includes a convolutional neural network (CNN) having been trained by deep learning, for example. The configuration of the neural network itself is similar to that of the object detection learning model 17. The type recognition learning model 19 includes an input layer 19a that receives input of piece image data, which is data of an image part of the screw piece 3a, an intermediate layer 19b that extracts features of the piece image data, and an output layer 19c that outputs accuracy data indicating the accuracy of a piece image belonging to each of the multiple classes.

A method of generating the type recognition learning model 19 is described. First, training data including multiple piece image data and teacher data indicating a class to which each piece image belongs are prepared. The class indicates a group classified depending on the type of the screw piece 3a. The arithmetic unit 11 then optimizes the weight coefficients of the neural network using, for example, error backpropagation and error gradient descent methods such that the error (value of a given loss function or error function) between data output, when a screw image of the training data is input to a CNN, from the CNN and data indicated by the teacher data is reduced, to thereby generate the type recognition learning model 19.

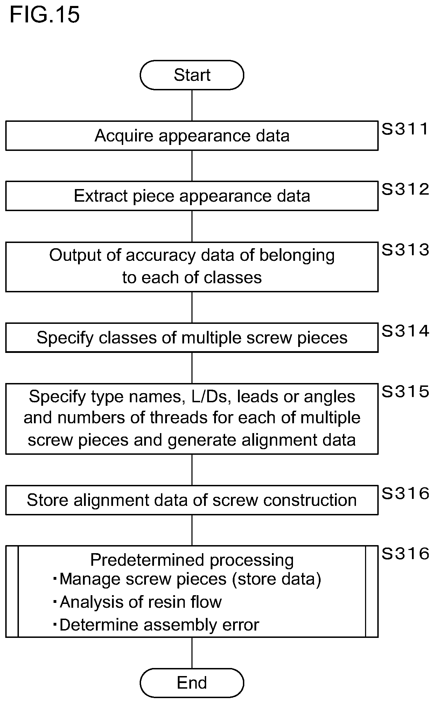

FIG. 15 is a flowchart depicting a screw construction inference method according to Embodiment 3. The arithmetic unit 11 of the screw construction inference device 1 acquires appearance data from the measurement device 2 via the communication unit 13 (step S311) and extracts piece appearance data corresponding to the piece image part (step S312). As in Embodiment 1, the arithmetic unit 11 is assumed to use two-dimensional screw image data based on the appearance data. In Embodiment 3, image data obtained by taking an image of the multiple screw pieces 3a aligned with spaces is preferably used as screw image data. The piece appearance data is piece image data corresponding to the part of the screw piece 3a in the screw image. The arithmetic unit 11 extracts a piece image by the processing such as pattern matching or the like.

There is no need to specify the type of the screw piece 3a at this stage, and it only needs to extract an image similar to the image of the screw piece 3a. Note that the arithmetic unit 11 recognizes the position of the piece image by extracting the piece image. In other words, the arithmetic unit 11 detects the alignment position of each of the multiple screw pieces 3a.

Next, the arithmetic unit 11 inputs the extracted piece image to the type recognition learning model 19 and obtains output of the accuracy data indicating the accuracy of a piece image belonging to each of multiple classes (step S313). The arithmetic unit 11 specifies the classes of the multiple screw pieces 3a based on the accuracy data output from the type recognition learning model 19 (step S314).

As in Embodiment 1, the arithmetic unit 11 generates alignment data of the screw 3 (step S315), stores it (step S316), and executes predetermined processing using the alignment data (step S316).

The screw construction inference device1 according to Embodiment 3 can infer the alignment positions and types of the multiple screw pieces 3a that constitute the screw 3 for the extruder A, as in Embodiment 1.

Though an example where piece appearance data is extracted by the image processing such as pattern matching is described, detection of a piece appearance image may also be executed using the machine learning model.

As for Embodiment 3, three-dimensional data of the screw 3 may be used for arithmetic processing to thereby generate alignment data of the screw 3.

While Embodiments 1 to 3 described examples where the alignment positions and types of the multiple screw pieces 3a that constitute the screw 3 are inferred by mainly using a learning model, they may be inferred by performing rule-based image processing.

For example, the screw construction inference device 1 may be configured to infer the alignment positions and types of the screw pieces 3a by template matching processing. The storage unit 12 of the screw construction inference device 1 stores the template images of the multiple types of the screw pieces 3a and the types of screw pieces 3a in association with each other. The arithmetic unit 11 specifies the positions and types of the multiple screw pieces 3a contained in the screw image by the template matching processing using the template images stored in the storage unit 12. The processing to be performed after specifying the alignment positions and types of the multiple screw pieces 3a is similar to those described in Embodiment 1 to 3 as described above.

The screw construction inference device 1 may be configured to infer the alignment positions and types of the screw pieces 3a based on the features. The storage unit 12 of the screw construction inference device 1 stores the features of the multiple types of the screw pieces 3a and the types of the screw pieces 3a in association with each other. Various types of features are conceivable including edges, shading changes and positional relationships between characteristic points. The arithmetic unit 11 specifies the positions and types of the multiple screw pieces 3a contained in the screw image in comparison with the features stored in the storage unit 12. The processing to be performed after specifying the alignment positions and types of the multiple screw pieces 3a is similar to those described in Embodiment 1 to 3 as described above.

### Reference Signs List

- 1: screw construction inference device
- 2: measurement device
- 3: screw
- 3a: screw piece
- 10: recording medium
- 11: arithmetic unit
- 12: storage unit
- 13: communication unit
- 14: display unit
- 15: operation unit
- 16: computer program
- 17: object detection learning model
- 18: screw piece table
- 19: type recognition learning model
- 131: appearance data capture screen
- 131a: captured image display unit
- 131b: screw construction inference start button
- A: extruder

## Claims

1. A screw construction inference device inferring a construction of a screw used for an extruder constructed by assembling a plurality of screw pieces, comprising:
an acquisition unit that acquires appearance data indicating an appearance of the screw or the plurality of screw pieces aligned; and
an arithmetic unit that infers an alignment position and a type for each of the plurality of screw pieces constituting the screw, based on the acquired appearance data.

2. The screw construction inference device according to claim 1, wherein the arithmetic unit generates alignment data in which an alignment order of the plurality of screw pieces constituting the screw is associated with a ratio of a length and a diameter, a lead or lead angle and the number of threads of each of the screw pieces, based on an inference result of an alignment position and a type of each of the plurality of screw pieces.

3. The screw construction inference device according to claim 1 or 2, wherein the arithmetic unit compares data related to a normal alignment position and a normal type of each of the plurality of screw pieces with data related to an alignment position and a type of each of the plurality of screw pieces to determine whether or not the construction of the screw to be determined is correct.

4. The screw construction inference device according to any one of claims 1 to 3, wherein the arithmetic unit compares data related to an alignment position and a type of each of a plurality of screw pieces constituting a first screw loaded in a twin-screw extruder with data related to an alignment position and a type of each of a plurality of screw pieces constituting a second screw loaded in the twin-screw extruder, to determine a presence or an absence of an assembly error of the first screw and the second screw.

5. The screw construction inference device according to any one of claims 1 to 4, wherein the arithmetic unit inputs the appearance data acquired by the acquisition unit to an object detection learning model and outputs data indicating an alignment position and a type of each of the plurality of screw pieces, the object detection learning model being so trained as to output, if appearance data indicating an appearance of the screw or the plurality of screw pieces aligned is input, data indicating an alignment position and a type of each of the plurality of screw pieces.

6. The screw construction inference device according to any one of claims 1 to 4, wherein the arithmetic unit infers data indicating an alignment position and a type of each of the plurality of screw pieces by performing rule-based image processing on the appearance data.

7. The screw construction inference device according to any one of claims 1 to 6, wherein the arithmetic unit
extracts piece appearance data representing an appearance of each of the screw pieces constituting the screw from the appearance data acquired by the acquisition unit, and
inputs the extracted piece appearance data to a type recognition learning model and infers a type of each of the plurality of screw pieces, the type recognition learning model being so trained as to output, if piece appearance data representing an appearance of a screw piece is input, data indicating a type of the screw piece.

8. The screw construction inference device according to any one of claims 1 to 7, wherein the appearance data includes image data obtained by imaging the plurality of screw pieces or the screw, or point group data obtained by measuring distances from a plurality of points on a surface of the plurality of screw pieces or the screw.

9. A screw construction inference method inferring a construction of a screw used for an extruder constructed by assembling a plurality of screw pieces, comprising:
acquiring appearance data indicating an appearance of the screw or the plurality of screw pieces aligned; and
inferring an alignment position and a type for each of the plurality of screw pieces constituting the screw, based on the acquired appearance data.

10. A computer program causing a computer to execute processing of inferring a construction of a screw used for an extruder constructed by assembling a plurality of screw pieces, the computer program causing the computer to execute the processing of:
acquiring appearance data indicating an appearance of the screw or the plurality of screw pieces aligned; and
inferring an alignment position and a type for each of the plurality of screw pieces constituting the screw, based on the acquired appearance data.
